# EUROPÄISCHE PATENTSCHRIFT

(11) **EP 3 966 593 B1**
(45) Veröffentlichungstag und Bekanntmachung des Hinweises auf die Patenterteilung: **02.09.2026**
(21) Anmeldenummer: 20724488.0
(22) Anmeldetag: 06.05.2020
(51) Int. Cl.: G01S 13/00, G01S 13/42, G01S 13/58, G01S 13/74, G01S 13/87, G01S 13/931

(54) **KOHÄRENTES, MULTISTATISCHES RADARSYSTEM, INSBESONDERE ZUR VERWENDUNG IN EINEM FAHRZEUG**
COHERENT, MULTISTATIC RADAR SYSTEM, IN PARTICULAR FOR USE IN A VEHICLE
SYSTÈME DE RADAR MULTISTATIQUE COHÉRENT, EN PARTICULIER POUR UNE UTILISATION DANS UN VÉHICULE

(30) Priorität: 09.05.2019 DE 102019112078
(43) Veröffentlichungstag der Anmeldung: 16.03.2022
(73) Patentinhaber: Robert Bosch GmbH, 70469 Stuttgart (DE)
(72) Erfinder: SCHLICHENMAIER, Johannes, 89073 Ulm (DE); MEINECKE, Benedikt, 89081 Ulm (DE); WALDSCHMIDT, Christian, 89081 Ulm (DE); HASCH, Jürgen, 70195 Stuttgart (DE)
(74) Vertreter: Qip Patent & Recht Dr. Kuehn & Partner mbB
(86) Internationale Anmeldenummer: PCT/EP2020/062601
(87) Internationale Veröffentlichungsnummer: WO 2020/225314

(56) Entgegenhaltungen:
- WO-A1-2018/069760
- DE-A1- 102013 008 953
- US-A- 5 826 819

## Beschreibung

### Gebiet der Erfindung

Die Erfindung betrifft ein Radarsystem, welches insbesondere in einem Fahrzeug verwendet werden kann.

### Stand der Technik

Ein Radarsystem wird dazu eingesetzt, entfernte Objekte zu detektieren. Dabei wird angestrebt, zumindest eine Position, möglicherweise aber auch Informationen über eine Bewegungsgeschwindigkeit und/oder eine Bewegungsrichtung eines Objekts mithilfe des Radarsystems ermitteln zu können. Hierzu sendet das Radarsystem mithilfe eines Radarsensors Radarsignale in Form elektromagnetischer Wellen aus und detektiert Echos dieser Radarsignale, d.h. Anteile der Radarsignale, die an dem Objekt zurückreflektiert werden.

Insbesondere werden Radarsysteme in modernen Fahrzeugen eingesetzt, um Objekte wie andere Fahrzeuge oder Hindernisse automatisch detektieren zu können, um dann beispielsweise basierend auf dabei gewonnenen Informationen einen Fahrer des Fahrzeugs mithilfe von Assistenzsystemen unterstützen oder sogar das Fahrzeug autonom steuern zu können.

WO 2018/069760 A1 offenbart ein bistatisches, interferometrisches, terrestrisches Radar mit einem Transponder. US 5,826,819 beschreibt ein Waffensystem, welches eine Transponderbombe einsetzt und ein Lenkverfahren hierfür. DE 10 2013 008 953 A1 beschreibt ein Verfahren zum Betreiben einer Radareinrichtung eines Fahrzeugs sowie eine Radareinrichtung für ein Fahrzeug.

### Offenbarung der Erfindung

Vor diesem Hintergrund werden mit dem hier vorgestellten Ansatz ein Radarsystem und ein Fahrzeug mit einem solchen Radarsystem gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, eine Genauigkeit, mit der mittels eines Radarsystems eine Position, Geschwindigkeit und/oder Bewegungsrichtung eines Objekts gemessen werden kann, mithilfe eines verhältnismäßig einfach aufgebauten Radarsystems zu erhöhen. Ein solches präziser arbeitendes Radarsystem kann vorteilhaft in einem Fahrzeug eingesetzt werden.

Gemäß einem ersten Aspekt der Erfindung wird ein Radarsystem gemäß Anspruch 1 beschrieben, welches insbesondere in einem Fahrzeug verwendet werden kann. Das Radarsystem weist einen Radarsensor zum Aussenden und Empfangen von ersten Radarsignalen sowie eine Auswerteeinrichtung zum Verarbeiten von durch den Radarsensor empfangenen Radarsignalen auf. Das Radarsystem zeichnet sich dadurch aus, dass es ein sogenanntes aktives Radar-Tag aufweist, welches dazu konfiguriert ist, empfangene Radarsignale verstärkt und moduliert als zweite Radarsignale wieder auszusenden. Ferner zeichnet sich das Radarsystem dadurch aus, dass die Auswerteeinrichtung dazu konfiguriert ist, Informationen über ein Objekt sowohl basierend auf von dem Radarsensor empfangenen Anteilen der an dem Objekt reflektierten ersten Radarsignale als auch basierend auf von dem Radarsensor empfangenen Anteilen der an dem Objekt reflektierten zweiten Radarsignale zu ermitteln.

Ein zweiter Aspekt der Erfindung betrifft ein Fahrzeug mit einem Radarsystem gemäß einer Ausführungsform des ersten Aspekts der Erfindung.

Ideen zu Ausführungsformen der vorliegenden Erfindung können unter anderem als auf den nachfolgend beschriebenen Gedanken und Erkenntnissen beruhend angesehen werden.

Um eine Genauigkeit beim Ermitteln einer Position und Bewegung eines Objekts steigern zu können, d.h. um eine Winkelauflösung eines Radarsystems erhöhen zu können, wurde vorgeschlagen, ein Netzwerk aus räumlich verteilten Radarsensoren aufzuspannen. Jeder der dabei eingesetzten Radarsensoren sollte als vollwertiger Radarsensor über eine Signalgenerierungseinheit, einen Sender und einen Empfänger verfügen. Jeder der Radarsensoren wird von einem RF-Analogsignal gesteuert, dass mittels einer physikalischen Verbindung zwischen den beteiligten Radarsensoren geteilt wird.

Ein Zusammenschalten von räumlich getrennten Radarsensoren, um die Winkelauflösung zu verbessern, geschieht gegenwärtig jedoch nur auf dem Gebiet der Radioastronomie. Dabei werden Methoden der Interferometrie eingesetzt. Eine kohärente Auswertung räumlich getrennter Radarsignale findet dabei nur unter Einsatz hochspezifischer Technik weitestgehend unter Laborbedingungen statt.

Es existieren weitere Ansätze zur kooperativen Auswertung mehrerer räumlich getrennter Radarsensoren. Bei diesem wird jedoch keine Kohärenz hergestellt.

Für eine kohärente Auswertung mehrerer Radarsignale muss im Regelfall ein hochfrequentes Sendesignal beispielsweise über starre Hohlleiter an mehrere getrennt platzierte Radarsensoren verteilt werden. Alternativ kann den Radarsensoren ein gemeinsames niederfrequentes Referenzsignal zur Verfügung gestellt werden, das zum Erzeugen von kohärenten Sendesignalen verwendet werden kann. Beide Ansätze erfordern hochspezialisierte Radar-Hardware sowie einen äußerst hohen mechanischen Aufwand. Daher finden diese Verfahren bisher außerhalb von idealisierten Laboraufbauten keine Anwendung.

Bei der kooperativen Auswertung von Signalen mehrerer Radarsensoren ohne Kohärenz verschlechtert sich im Allgemeinen ein Signal-zu-Rausch-Abstand (SN-Ratio) erheblich, sodass ein Betrieb über wenige Meter hinaus kaum möglich ist. Durch die fehlende Signalkohärenz ist zudem eine Phasenauswertung, wie sie beispielsweise für eine Winkel- und Geschwindigkeitsschätzung benötigt wird, im Allgemeinen unmöglich.

Mit dem hier vorgestellten Ansatz wird ein Radarsystem vorgeschlagen, bei dem virtuell ein Netzwerk aus räumlich verteilten Radarsensoren aufgespannt wird, wobei bei dem vorgeschlagenen Netzwerk eine Signal- und Rauschkohärenz erhalten bleibt. Dadurch kann neben einer Entfernung eines Objekts aufgrund der noch vorhandenen Phaseninformation auch eine Geschwindigkeit sowie ein Winkel einer Bewegung des Ziels, d.h. eines Objekts bzw. von Teilbereichen eines ausgedehnten Objekts, gemessen werden. Die räumliche Verteilung der Radarsensoren kann dabei zu einer erhöhten Winkelauflösung führen. Dementsprechend wird eine direkte Schätzung von Bewegungsparametern insbesondere ausgedehnter Objekte, wie zum Beispiel Fahrzeugen, aufgrund von verschiedenen Ansichtswinkeln auf die Objekte, die sich durch die räumliche Trennung der virtuellen Sensorpositionen ergeben, ermöglicht.

Grob zusammengefasst wird bei Ausführungsformen des hierin vorgestellten Radarsystems ein Netzwerk aufgebaut, welches neben zumindest einem Radarsensor über zumindest ein sogenanntes aktives Radar-Tag verfügt. Das Radar-Tag wird teilweise auch als aktives Tag oder Repeater-Tag bezeichnet. Es handelt sich bei dem Radar-Tag um ein System, das Radarsignale empfangen, verstärken und dann moduliert wieder aussenden kann. Insbesondere kann das Radar-Tag HF-Radarsignale, welche von einem zu beobachtenden Objekt reflektiert wurden, empfangen, verstärken und modulieren und anschließend wieder aussenden, ohne dass die Rauschkohärenz, insbesondere die Phasenrauschkohärenz, dabei zerstört wird. Dementsprechend bleibt die Signal- und Rauschkohärenz erhalten, sodass auch die Phaseninformation des beobachteten Objekts auswertbar bleibt und so beispielsweise für die Winkel- und Geschwindigkeitsschätzung weiterhin zur Verfügung steht.

Das Radar-Tag des vorgeschlagenen Radarsystems kann somit zwar nicht selbstständig Radarsignale generieren. Es kann jedoch auftreffende Radarsignale empfangen, modulieren, aktiv verstärken und dann wieder aussenden.

Der Radarsensor des Radarsystems ist dazu in der Lage, Radarsignale in einem relativ breiten Frequenzspektrum zu empfangen, sodass nicht nur die von dem Radarsensor selbst generierten und ausgesandten ersten Radarsignale, sondern auch die von dem Radar-Tag modulierten und zurückgesendeten zweiten Radarsignale von dem Radarsensor empfangen werden können.

Die Auswerteeinrichtung des hierin vorgeschlagenen Radarsystems ist dabei dazu in der Lage, Informationen über ein zu beobachtendes Objekt basierend auf Anteilen der an dem Objekt reflektierten ersten Radarsignale, die von dem Radarsensor empfangen wurden, zu ermitteln. Ergänzend ist die Auswerteeinrichtung auch in der Lage, Informationen über das Objekt basierend auf Anteilen der an dem Objekt reflektierten zweiten Radarsignale, die ebenfalls von dem Radarsensor empfangenen wurden, zu ermitteln. Da die zweiten Radarsignale ein moduliertes Abbild der ersten Radarsignale darstellen, ist einerseits in diesen die in den ersten Radarsignalen enthaltene Phaseninformation weitgehend kohärent enthalten. Andererseits unterscheiden sich die zweiten Radarsignale von den ersten Radarsignalen aufgrund der durchgeführten Modulation geringfügig, aber ausreichend, sodass beide Radarsignale von dem Radarsensor bzw. der Auswerteeinrichtung unterschieden werden können.

Durch die Verwendung des Radar-Tags ist es realistisch möglich, ein verteiltes Radarsensor-Netzwerk quasi virtuell aufzuspannen, da eine Notwendigkeit, eine physikalische Verbindung zwischen den Radarsensoren herzustellen, entfällt. Das Radar-Tag empfängt das vom Radarsensor ausgestrahlte und an einem Objekt hin zu dem Radar-Tag reflektierte erste Radarsignal, verstärkt und moduliert es, und sendet es anschließend wieder in Richtung des als Sendesensorknoten wirkenden Radarsensors. Somit ist eine zusätzliche Phaseninformation des beobachteten Objekts abhängig von der Position des Radar-Tags verfügbar, mit der beispielsweise eine Winkel- und Geschwindigkeitsschätzung betrieben werden kann.

Durch den Einsatz eines oder mehrerer Radar-Tags zusammen mit zumindest einem Radarsensor können somit zusätzliche, virtuelle Sensorpositionen erzeugt werden. Das Radar-Tag kann daher als zusätzlicher Sensor betrachtet werden, dessen empfangene zweite Radarsignale am physikalischen Radarsensor bzw. durch die mit dem Radarsensor verbundene Auswerteeinrichtung kohärent ausgewertet werden können. Durch die Phasenkohärenz kann eine sehr große Apertur der virtuellen Sensorpositionen entstehen. Hierdurch kann eine sehr hohe Winkelauflösung erreicht werden. Die erhaltene Phasenkohärenz kann außerdem eine Auswertung der Geschwindigkeitsinformationen des beobachteten Objekts ermöglichen. Der Signal-zu-Rausch-Abstand der Ziele bleibt durch die erhaltene Rauschkohärenz zudem größtenteils unbeeinträchtigt.

Ausführungsformen des hierin beschriebenen Radarsystems benötigen im Allgemeinen keine speziell entwickelte Radar-Hardware. Gängige Radarsysteme können durch Hinzufügen eines oder mehrerer aktiver Radar-Tags sowie ein Anpassen der Informationsermittlung in der Auswerteeinrichtung dazu in die Lage versetzt werden, Positions- und Bewegungsinformationen zu einem beobachteten Objekt mit hoher Präzision ermitteln zu können.

Das Radar-Tag selbst kann verhältnismäßig einfach aufgebaut sein und aus nur einigen wenigen Komponenten bestehen. Insbesondere benötigt das Radar-Tag nicht notwendigerweise eine digitale Schaltungstechnik. Das Radar-Tag benötigt lediglich eine Spannungsversorgung und ein geeignetes Modulationssignal, wodurch nur geringe Anforderungen an den mechanischen bzw. elektrischen Aufbau des mit dem hierin beschriebenen Radarsystem generierten Netzwerks gestellt werden.

Es wurden bereits mehrere verschiedene aktive Radar-Tags beschrieben, die in dem hier vorgestellten Radarsystem eingesetzt werden können. Ein mögliches aktives Radar-Tag wurde beschrieben in Sarkas et al.: "W-band 65-nm CMOS and SiGe BiCMOS transmitter and receiver with lumped I-Q phase shifters", publiziert in 2009 IEEE Radio Frequency Integrated Circuits Symposium (DOI: 10.1109/RFIC.2009.5135576). Ein weiteres mögliches aktives Radar-Tag wurde beschrieben in Dadash et al.: "Design of Low-Power Active Tags for Operation With 77-81-GHz FMCW Radar", publiziert in IEEE Transactions on Microwave Theory and Techniques, Volume: 65 , Issue: 12 , Dec. 2017 (DOI: 10.1109/TMTT.2017.2769079).

Erfindungsgemäß ist das aktive Radar-Tag dazu konfiguriert, empfangene Radarsignale verstärkt und in ihrer Frequenz um eine Frequenzänderung versetzt als zweite Radarsignale wieder auszusenden.

Mit anderen Worten kann das aktive Radar-Tag empfangene Radarsignale dadurch modellieren, dass eine Frequenz des empfangenen Radarsignals um einen geringen Betrag geändert wird, d.h. ein kleiner Frequenz-Shift vorgenommen wird, bevor das modulierte Radarsignal als zweites Radarsignal wieder ausgesendet wird. Eine solche Frequenzmodulation ist einerseits in dem Radar-Tag technisch einfach implementierbar. Andererseits kann das in seiner Frequenz um die Frequenzänderung versetzte zweite Radarsignal einfach von dem Radarsensor empfangen und aufgrund des Frequenzunterschieds von dem ersten Radarsignal bzw. Echos des ersten Radarsignals unterschieden werden.

Insbesondere kann die Frequenzänderung zwischen 0,5 kHz und 2 MHz, vorzugweise zwischen 2 kHz und 500 kHz und stärker bevorzugt zwischen 10 kHz und 100 kHz betragen. Derartige Frequenzänderungen haben einerseits lediglich geringfügigen Einfluss auf eine Phaseninformation in dem Radarsignal, das typischerweise mit einer Frequenz im Bereich von vielen Gigahertz ausgestrahlt wird. Andererseits kann das zweite Radarsignal mit einer solchen Frequenzänderung mit technisch einfachen Mitteln von dem unveränderten ersten Radarsignal unterschieden werden.

Gemäß einer Ausführungsform ist das aktive Radar-Tag dazu konfiguriert, empfangene Radarsignale um bis zu wenigstens 10 dB, vorzugsweise um bis zu wenigstens 20 dB, verstärkt als zweite Radarsignale wieder auszusenden.

Anders ausgedrückt soll das Radar-Tag in der Lage sein, Radarsignale, die als erste Radarsignale von dem Radarsensor hin zu einem Objekt und dann als Echos weiter bis zu dem Radar-Tag gelangen und dabei erheblich an Signalstärke verlieren, um bis zu wenigstens 10 dB oder mehr verstärken zu können, um sie dann verstärkt als zweite Radarsignale wieder auszusenden. Durch die Möglichkeit, die zweiten Radarsignale ausreichend verstärkt wieder aussenden zu können, kann sichergestellt werden, dass die zweiten Radarsignale, welche auf ihrem Weg zurück zu dem Radarsensor wiederum an Signalintensität verlieren, letztendlich noch mit einer ausreichenden Signalintensität an dem Radarsensor ankommen, um dort zuverlässig detektiert werden zu können. Typischerweise wird das Radar-Tag keine Verstärkungen von mehr als 40 dB ermöglichen.

"Um bis zu wenigstens 10 dB" kann dabei dahingehend verstanden werden, dass das Radar-Tag empfangene Signale generell um wenigstens 10 dB verstärken kann, je nach konkreter Situation und Signalstärke eines empfangenen Signals jedoch diese Verstärkungsmöglichkeit nicht in allen Fällen voll einsetzen braucht, sondern bei relativ starken empfangenen Signalen auch eine geringere Verstärkung umsetzen kann.

Gemäß einer Ausführungsform ist der Radarsensor ein MIMO-Radarsensor mit mehreren Sendeantennen und mehreren Empfangsantennen.

Bei einem MIMO-Radarsensor (Multiple -Input Multiple-Output) strahlt jede Sendeantenne unabhängig von den anderen Sendeantennen ein beliebiges Sendesignal aus, welches von jeder Empfangsantenne empfangen, digitalisiert und dann einer gemeinsamen Radarsignalverarbeitung unterzogen werden kann. Aus einem Feld von N Sendeantennen und einem Feld von K Empfangsantennen entsteht rechnerisch ein virtuelles Feld von K·N Elementen mit einer stark vergrößerten virtuellen Apertur.

MIMO Radarsysteme können genutzt werden, um das räumliche Auflösungsvermögen zu verbessern und eine wesentlich verbesserte Immunität gegenüber Störungen zu erreichen. Mittels der Verbesserung des Signal-Rauschverhältnisses wird ebenfalls die Entdeckungswahrscheinlichkeit von Zielen erhöht.

Bei dem Radarsensor des vorliegend beschriebenen Radarsystems kann es sich vorzugsweise um einen mono-statischen MIMO-Radarsensor handeln, bei dem die Antennen alle auf engstem Raum konzentriert sind, ähnlich einem Punktziel wie bei traditionellen Radarsystemen. Im Gegensatz hierzu sind bei einem bi-statischen oder "distributed" MIMO-Radarsensor die Antennen weitläufig im Raum verteilt, sodass ein Ziel wird von jeder der Antennen aus einem anderen Aspektwinkel betrachtet wird. Ein mono-statisches MIMO-Radarsystem ähnelt von seinem Aufbau her einer Phased Array Antenne mit einem ausgedünnten Antennenfeld, bei der jeder einzelne Strahler ein eigenes Sende-Empfangsmodul und einen eigenen A/D-Wandler hat. Bei einer Phased Array Antenne sendet jedoch jeder Strahler nur eine ggf. zeitversetzte Kopie eines Sendesignals, das in einem zentralen Waveform Generator erzeugt wird. Bei einem MIMO-Radarsystem hat jeder Strahler auch einen eigenen Waveform-Generator mit in der Folge einer individuellen Signalform. Diese individuelle Signalform ist auch die Grundlage für eine Zuordnung von Echosignalen zu ihrer Quelle. Für eine effektivere Radarsignalverarbeitung kann dann jedes einzelne Sendesignal gezielt verändert werden ("adaptive Waveform") mit dem Ziel, für jedes einzelne Ziel in der folgenden Abtastung das Signal/Rauschverhältnis (SNR) sowie das Verhältnis von Signal zu Störungen und Rauschen ("signal-to-interference-plus-noise ratio", SINR) zu verbessern. Wenn die Erzeugung der jeweiligen Wave-Form in den Sendern synchron zueinander erfolgt, also ein synchronisierender Takt aus einem gemeinsamen "Muttergenerator" zugrunde liegt, spricht man von einem kohärenten MIMO.

Gemäß einer konkretisierten Ausführungsform kann der MIMO-Radarsensor weniger als vier Sendeantennen und weniger als fünf Empfangsantennen aufweisen.

Herkömmlich wurde versucht, eine Auflösung von Radarsystemen dadurch zu erhöhen, dass in ihrem MIMO-Radarsensor mehr als die konventionell üblichen drei Sendeantennen und vier Empfangsantennen enthalten sind. Beispielsweise wurden zur Verbesserung der Auflösung MIMO-Radarsensoren mit sechs Sendeantennen und acht Empfangsantennen vorgeschlagen. Dies bringt jedoch eine erhöhte Komplexität und somit einen erhöhten Fertigungsaufwand und gesteigerte Kosten mit sich.

Mit dem hierin vorgeschlagenen Radarsystem kann eine verbesserte Auflösung erreicht werden, ohne dass eine Komplexität der eingesetzten Radarsensoren vergrößert werden müsste. Insbesondere können einfach aufgebaute, kostengünstige MIMO-Radarsensoren mit maximal drei Sendeantennen und maximal vier Empfangsantennen verwendet werden.

Gemäß einer Ausführungsform kann sowohl das erste Radarsignal als auch das zweite Radarsignal in einem Frequenzbereich von zwischen 40 GHz und 120 GHz, vorzugsweise in einem Frequenzbereich von zwischen 60 GHz und 100 GHz und stärker bevorzugt in einem Frequenzbereich von zwischen 70 GHZ und 90 GHz, liegen.

Anders ausgedrückt kann der Radarsensor dazu konfiguriert sein, Radarsignale in dem genannten Frequenzbereich auszusenden und zu empfangen. Außerdem kann das aktive Radar-Tag dazu konfiguriert sein, Radarsignale in dem genannten Frequenzbereich zu empfangen, zu verstärken, zu modulieren und wieder auszusenden. Beispielsweise wurden Radar-Tags vorgeschlagen, die für einen Betrieb in einem Frequenzbereich von 77 bis 81 GHz ausgelegt sind.

Insbesondere können die in dem Radarsystem eingesetzten Radarsignale Dauerstrich-Radarsignale, d.h. FMCW-Radarsignale (englisch: Frequency Modulated Continuous Wave) sein.

Erfindungsgemäß sind der Radarsensor und das aktive Radar-Tag seitlich von einander in einem Abstand von zwischen 1 cm und 10 m, vorzugsweise zwischen 10 cm und 2 m, stärker bevorzugt zwischen 20 cm und 2 m, beabstandet.

Mit anderen Worten können der Radarsensor und ein oder mehrere aktive Radar-Tags derart relativ zueinander angeordnet sein, dass diese wesentlich, d.h. beispielsweise zehnfach bis tausendfach, weiter voneinander beabstandet sind als ein Abstand zwischen mehreren Antennen innerhalb des Radarsensors selbst. Der Abstand zwischen dem Radarsensor und dem aktiven Radar-Tag kann beispielsweise dem Zehnfachen bis Tausendfachen der Wellenlänge der eingesetzten Radarsignale entsprechen. Ein solcher seitlicher Abstand ermöglicht einerseits, mit dem vorgeschlagenen Radarsystem eine hohe räumliche Auflösung zu erreichen. Andererseits können Mehrdeutigkeiten bei der Interpretation von empfangenen Radarsignalen noch weitgehend problemlos analysiert werden.

Der Radarsensor und der bzw. die Radar-Tags können dabei an einer gemeinsamen Oberfläche beispielsweise einer Fahrzeugkarosserie angeordnet sein, z.B. in einem Stoßfänger oder einer Frontschürze. Sie können aber auch an verschiedenen Oberflächen und/oder in verschiedenen Höhen angeordnet sein. Beispielsweise kann ein Radar-Tag seitlich an einer Fahrzeugkarosserie angebracht sein und der Radarsensor an einer Front der Fahrzeugkarosserie, oder umgekehrt.

Gemäß einer Ausführungsform kann das aktive Radar-Tag dazu konfiguriert sein, die zweiten Radarsignale in einer Richtung entgegengesetzt zu den empfangenen Radarsignalen auszusenden.

Anders ausgedrückt kann das aktive Radar-Tag derart ausgestaltet sein, dass eine Empfangsantenne erste Radarsignale aus einem bestimmten Winkelbereich kommend empfangen kann und eine Sendeantenne die modulierten und verstärkten zweiten Radarsignale im Wesentlichen in diejenige Richtung zurücksenden kann, aus der die ersten Radarsignale empfangen wurden. Damit kann erreicht werden, dass die zweiten Radarsignale zu einem großen Teil zu dem Objekt gesendet werden, von dem erste Radarsignale in Form von Echos hinzu dem aktiven Radar-Tag reflektiert wurden.

Mit einer solchen Ausgestaltung kann erreicht werden, dass erste Radarsignale von dem Radarsensor hin zu einem Objekt emittiert werden können und dabei ein Teil dieser ersten Radarsignale direkt zurück zu dem Radarsensor reflektiert wird und ein anderer Teil der ersten Radarsignale hin zu dem aktiven Radar-Tag reflektiert wird. Von dem aktiven Radar-Tag können dann die zweiten Radarsignale wieder zurück zu dem Objekt gesendet werden und von diesem als Echos hinzu dem Radarsensor reflektiert werden. Der Radarsensor kann dabei aufgrund der an dem aktiven Radar-Tag durchgeführten Modulation zwischen Echos der ersten Radarsignale und Echos der zweiten Radarsignale unterscheiden.

Insgesamt kann das Radarsystem auf diese Weise als virtuell aufgespanntes Netzwerk wirken, bei dem das Objekt aus verschiedenen Winkeln mit Radarsignalen bestrahlt wird und somit Echos aus verschiedenen Winkeln von dem Radarsensor empfangen werden können. Das Objekt kann somit nicht lediglich entlang eines mono-statischen Pfads erkannt werden, sondern entlang eines bi-statischen Pfads bzw. für den Fall, dass mehrere aktive Radar-Tags eingesetzt werden, entlang eines multi-statischen Pfads. Aufgrund der unterschiedlichen winkelabhängigen Radarsignatur des Objekts kann somit eine erhöhte Auflösung erreicht werden.

Gemäß einer alternativen Ausführungsform kann das aktive Radar-Tag dazu konfiguriert sein, die zweiten Radarsignale in einer Richtung hin zu dem Radarsensor auszusenden.

Mit anderen Worten kann das aktive Radar-Tag die zweiten Radarsignale nicht überwiegend hin zu dem Objekt, von dem Echos der ersten Radarsignale empfangen wurden, aussenden, sondern direkt hin zu dem Radarsensor. Hierdurch kann ein Laufweg, den die zweiten Radarsignale zurücklegen müssen, bevor sie den Radarsensor erreichen, verkürzt werden und somit Dämpfungsverluste bei den Radarsignalen verringert werden.

Ausführungsformen des hierin beschriebenen Radarsystems können insbesondere in einem Fahrzeug gemäß einer Ausführungsform des zweiten Aspekts der Erfindung eingesetzt werden. Dabei kann einerseits vorteilhaft genutzt werden, dass das vorgeschlagene Radarsystem eine erhöhte Auflösung ermöglicht und damit eine Erkennungswahrscheinlichkeit von entfernten Gegenständen wie anderen Fahrzeugen oder Hindernissen verbessern kann. Andererseits kann vorteilhaft genutzt werden, dass das vorgeschlagene Radarsystem mit verhältnismäßig wenigen sowie einfachen und kostengünstigen Komponenten auskommt.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Draufsicht auf ein Fahrzeug mit einem Radarsystem gemäß einer Ausführungsform der Erfindung.
Fig. 2 veranschaulicht Signalwege eines bi-statischen Pfads in einem Radarsystem gemäß einer Ausführungsform der Erfindung.
Fig. 3 zeigt eine beispielhafte Ausgestaltung eines aktiven Radar-Tags für ein Radarsystem gemäß einer Ausführungsform der Erfindung.
Fig. 4 veranschaulicht Signalwege eines bi-statischen Pfads in einem Radarsystem gemäß einer alternativen Ausführungsform der Erfindung.
Fig. 5 veranschaulicht Signalwege eines bi-statischen Pfads in einem Radarsystem gemäß einer weiteren alternativen Ausführungsform der Erfindung.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

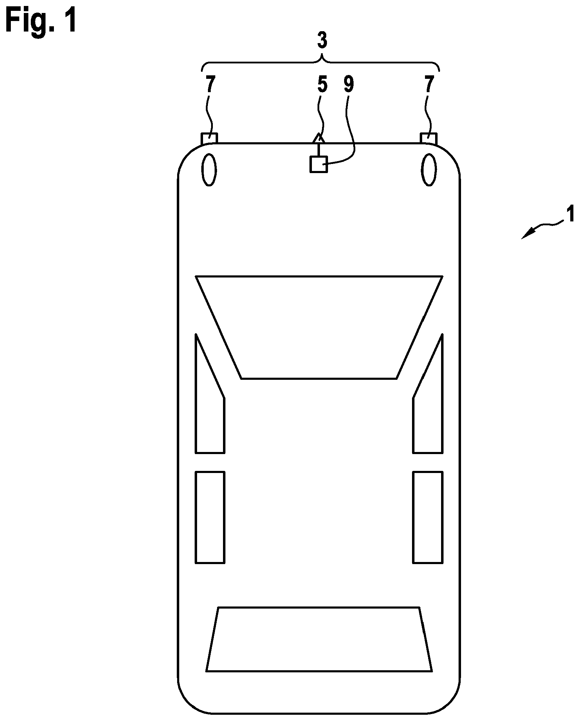

Fig. 1 zeigt ein Fahrzeug 1 in Form eines Autos mit einem Radarsystem 3 gemäß einer Ausführungsform der vorliegenden Erfindung. Das Radarsystem 3 umfasst einen Radarsensor 5, zwei aktive Radar-Tags 7 sowie eine Auswerteeinrichtung 9.

Im dargestellten Beispiel ist der Radarsensor 5 zentral an einer Front des Fahrzeugs 1 angeordnet, beispielsweise im Bereich einer Stoßstange oder einer Schürze an der Karosserie des Fahrzeugs 1. Die beiden aktiven Radar-Tags 7 sind jeweils an gegenüberliegenden Seiten an der gleichen Front des Fahrzeugs 1 angeordnet. Eine solche Anordnung ist jedoch lediglich beispielhaft. Prinzipiell kann sowohl der Radarsensor 5 als auch die aktiven Radar-Tags 7 an verschiedenen Stellen an einer Karosserie des Fahrzeugs 1 angeordnet sein.

Der Radarsensor 5 ist mit einer Leistungsversorgung (nicht dargestellt) verbunden und ist dazu ausgelegt, erste Radarsignale auszusenden und zu empfangen. Hierzu verfügt der Radarsensor 5 über einen Signalgenerator, wenigstens eine Sendeantenne sowie wenigstens eine Empfangsantenne. Vorzugsweise ist der Radarsensor 5 als MIMO-Radarsensor mit mehreren Sendeantennen und mehreren Empfangsantennen ausgestattet.

Im dargestellten Beispiel ist die Auswerteeinrichtung 9 extern von dem Radarsensor 5 vorgesehen und mit diesem zum Austausch von Signalen verbunden. Alternativ kann die Auswerteeinrichtung 9 auch in den Radarsensor 5 integriert sein.

Die aktiven Radar-Tags 7 sind dazu konfiguriert, ankommende Radarsignale zu empfangen, zu verstärken, zu modulieren und anschließend als zweite Radarsignale wieder auszusenden. Hierzu verfügt jedes aktive Radar-Tag 7 über wenigstens eine Empfangsantenne, einen Verstärker, einen Modulator und eine Sendeantenne.

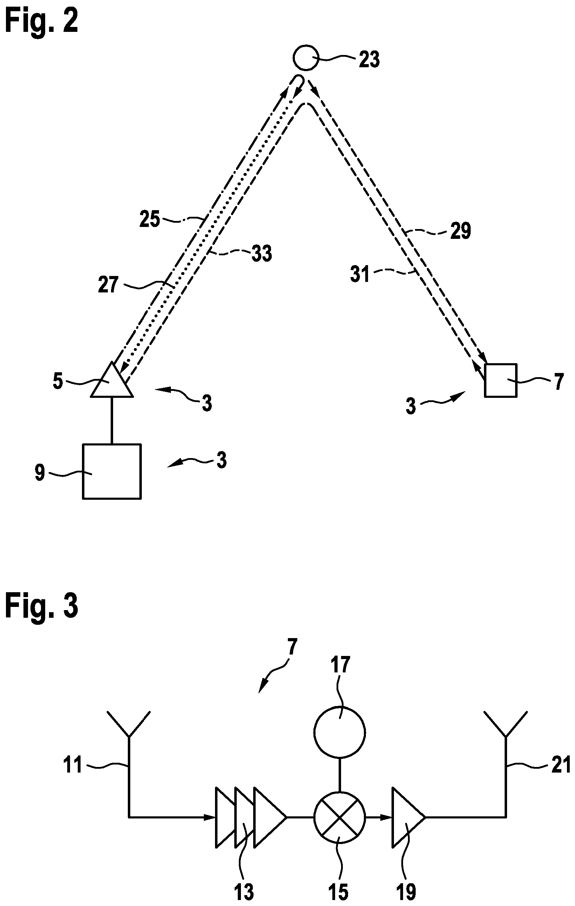

In Fig. 3 ist beispielhaft eine Ausgestaltung eines aktiven Radar-Tags 7 dargestellt. Das Radar-Tag 7 weist eine Empfangsantenne 11, einen 3-stufigen rauscharmen Verstärker 13 (low noise amplifier - LNA), einen Mischer 15, einen externen lokalen Oszillator 17, einen Verstärker 19 mit variablem Verstärkungsgrad (variable gain amplifier - VGA) und eine Sendeantenne 21 auf.

Das aktive Radar-Tag 7 ist dazu in der Lage, FMCW-Radarsignale in einem Frequenzband beispielsweise in der Nähe von 77 GHz sowohl zu verstärken als auch geringfügig in ihrer Frequenz zu versetzen.

Fig. 2 veranschaulicht Signalwege von Radarsignalen, welche bei dem Radarsystem 3 ausgesendet und wieder empfangen werden.

Der Radarsensor 5 sendet ein erstes Radarsignal 25 in einer Richtung hin zu einem Objekt 23 aus. Das erste Radarsignal 25 ist strichpunktiert dargestellt. An dem Objekt 23 wird ein Teil dieses ersten Radarsignals 25 direkt zurück zu dem Radarsensor 5 reflektiert und kann dort als Echo 27 des ersten Radarsignals 25 empfangen werden. Das Echo 27 des ersten Radarsignals 25 ist gepunktet dargestellt. Ein anderer Teil 29 des ersten Radarsignals 25 wird hin zu dem aktiven Radar-Tag 7 reflektiert. Dort wird dieser Teil 29 des ersten Radarsignals 25 empfangen und von dem aktiven Radar-Tag 7 verstärkt und moduliert, bevor er dann als zweites Radarsignal 31 in einer Richtung zurück zu dem Objekt 23 gesendet wird. Dieses zweite Radarsignal 31 wird wiederum an dem Objekt 23 reflektiert und kann dann als Echo 33 von dem Radarsensor 5 empfangen werden.

Die Auswerteeinrichtung 9 kann daraufhin Informationen über das Objekt 23 sowohl basierend auf den Echos 27, die Anteilen der an dem Objekt 23 reflektierten ersten Radarsignale 25 entsprechen, als auch basierend auf den Echos 33, die Anteilen der an dem Objekt 23 reflektierten zweiten Radarsignale 31 entsprechen, ermitteln.

Im dargestellten Beispiel umfasst das Radarsystem 3 der Einfachheit halber lediglich ein einziges aktives Radar-Tag 7, sodass von den ersten und zweiten Radarsignalen 25, 31 und deren Echos 27, 29, 33 ein bi-statischer Pfad gebildet wird. Das Radarsystem 3 kann jedoch auch mehrere aktive Radar-Tags 7 umfassen, sodass sich ein multi-statischer Pfad ergibt.

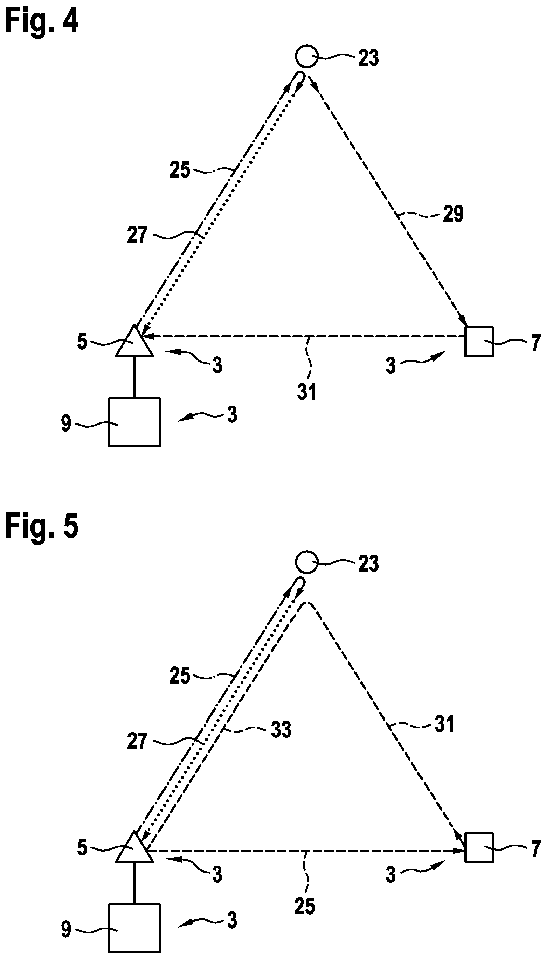

Fign. 4 und 5 veranschaulichen Signalwege von Radarsignalen, welche bei alternativ ausgestalteten Radarsystemen 3 ausgesendet und wieder empfangen werden.

Der Radarsensor 5 sendet auch in diesen Fällen ein erstes Radarsignal 25 in einer Richtung hin zu einem Objekt 23 aus und an dem Objekt 23 wird ein Teil dieses ersten Radarsignals 25 direkt zurück zu dem Radarsensor 5 reflektiert und kann dort als Echo 27 des ersten Radarsignals 25 empfangen werden. Ein anderer Teil 29 des ersten Radarsignals 25 wird bei der Ausgestaltung in Fig.4 hin zu dem aktiven Radar-Tag 7 reflektiert. Dort wird dieser Teil 29 des ersten Radarsignals 25 empfangen und von dem aktiven Radar-Tag 7 verstärkt und moduliert. Anschließend wird er als zweites Radarsignal 31 in einer Richtung direkt zu dem Radarsensor 5 gesendet und von diesem empfangen. Alternativ wird bei der Ausgestaltung in Fig. 5 ein Teil des ersten Radarsignals 25 direkt hin zu dem Radar-Tag 7 gesendet, dort verstärkt und moduliert und dann als zweites Radarsignal 31 hin zu dem Objekt 23 gesendet. Von dort aus werden Echos 33 zu dem Radarsensor 5 geschickt und dort empfangen. Auch in diesen Ausgestaltungen ergeben sich bi-statische Pfade, welche signifikant kürzer sein können als bei der Ausgestaltung aus Fig. 2.

Es wird darauf hingewiesen, dass von Erfindern der vorliegenden Erfindung geplant ist, weitergehende Details zu möglichen Ausgestaltungen des hierin beschriebenen Radarsystems einschließlich Details zu den darin verwendbaren aktiven Radar-Tags sowie Details zu einer möglichen Signalgenerierung und Signalauswertung in dem Radarsystem in einem wissenschaftlichen Artikel mit dem Titel "Coherent Multistatic MIMO Radar Networks based on Repeater-Tags" zu veröffentlichen. Der Artikel wird voraussichtlich in IEEE Transactions of Microwave Theories and Techniques veröffentlicht.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Radarsystem (3), insbesondere zur Verwendung in einem Fahrzeug (1), wobei das Radarsystem (3) aufweist:
einen Radarsensor (5) zum Aussenden und Empfangen von ersten Radarsignalen (25);
eine Auswerteeinrichtung (9) zum Verarbeiten von durch den Radarsensor (5) nach einer Reflektion an einem Objekt empfangenen Radarsignalen (27, 33);
wobei
das Radarsystem (3) ferner zumindest ein aktives Radar-Tag (7) aufweist, welches dazu konfiguriert ist, empfangene Radarsignale (29) verstärkt und moduliert als zweite Radarsignale (31) wieder auszusenden, wobei der Radarsensor (5) und das aktive Radar-Tag (7) seitlich von einander in einem Abstand von zwischen 1cm und 10m, vorzugsweise in einem Abstand von zwischen 10cm und 2m, beabstandet sind, wobei das aktive Radar-Tag (7) dazu konfiguriert ist, empfangene Radarsignale (29) verstärkt und in ihrer Frequenz um eine Frequenzänderung versetzt als zweite Radarsignale (31) wieder auszusenden, und
die Auswerteeinrichtung (9) dazu konfiguriert ist, Informationen über das Objekt (23) sowohl basierend auf von dem Radarsensor (5) empfangenen Anteilen (27) der an dem Objekt (23) reflektierten ersten Radarsignale (25) als auch basierend auf von dem Radarsensor (5) empfangenen Anteilen (33) der an dem Objekt (23) reflektierten zweiten Radarsignale (31) zu ermitteln, oder Informationen über das Objekt sowohl basierend auf von dem Radarsensor empfangenen Anteilen der an dem Objekt reflektierten ersten Radarsignale als auch basierend auf von dem Radarsensor empfangenen zweiten Radarsignalen zu ermitteln, wobei die zweiten Radarsignale durch das aktive Radar-Tag nach Empfang von an dem Objekt reflektierten ersten Radarsignalen in einer Richtung hin zu dem Radarsensor ausgesendet werden.

2. Radarsystem nach Anspruch 1, wobei das aktive Radar-Tag (7) dazu konfiguriert ist, empfangene Radarsignale (29) verstärkt und frequenzmoduliert als zweite Radarsignale (31) wieder auszusenden.

3. Radarsystem nach Anspruch 2, wobei die Frequenzänderung zwischen 0,5 kHz und 2 MHz beträgt.

4. Radarsystem nach einem der vorangehenden Ansprüche, wobei das aktive Radar-Tag (7) dazu konfiguriert ist, empfangene Radarsignale (29) um bis zu wenigstens 10 dB verstärkt als zweite Radarsignale (31) wieder auszusenden.

5. Radarsystem nach einem der vorangehenden Ansprüche, wobei der Radarsensor (5) ein MIMO-Radarsensor mit mehreren Sendeantennen und mehreren Empfangsantennen ist.

6. Radarsystem nach Anspruch 5, wobei der MIMO-Radarsensor weniger als vier Sendeantennen und weniger als fünf Empfangsantennen aufweist.

7. Radarsystem nach einem der vorangehenden Ansprüche, wobei sowohl das erste Radarsignal (25) als auch das zweite Radarsignal (31) in einem Frequenzbereich von zwischen 40 GHz und 120 GHz liegt.

8. Radarsystem nach einem der vorangehenden Ansprüche, wobei das aktive Radar-Tag (7) dazu konfiguriert ist, die zweiten Radarsignale (31) in einer Richtung entgegengesetzt zu den empfangenen Radarsignalen (29) auszusenden.

9. Radarsystem nach einem der Ansprüche 1 bis 7, wobei das aktive Radar-Tag (7) dazu konfiguriert ist, die zweiten Radarsignale (31) in einer Richtung hin zu dem Radarsensor (5) auszusenden.

10. Fahrzeug (1) mit einem Radarsystem (3) gemäß einem der vorangehenden Ansprüche.

## Claims

1. Radar system (3), in particular for use in a vehicle (1), wherein the radar system (3) comprises:
a radar sensor (5) for emitting and receiving first radar signals (25);
an evaluation device (9) for processing radar signals (27, 33) received by the radar sensor (5) after a reflection at an object;
wherein
the radar system (3) further comprises at least one active radar tag (7), which is configured to reemit received radar signals (29) amplified and modulated as second radar signals (31), wherein the radar sensor (5) and the active radar tag (7) are laterally spaced from each other at a distance of between 1 cm and 10 m, preferably at a distance of between 10 cm and 2 m, wherein the active radar tag (7) is configured to reemit received radar signals (29) amplified and offset in their frequency by a frequency change as second radar signals (31), and
the evaluation device (9) is configured to determine information about the object both based on portions of the first radar signals reflected at the object received by the radar sensor and based on portions of the second radar signals reflected at the object received by the radar sensor, or to determine information about the object both based on portions of the first radar signals reflected at the object received by the radar sensor and based on second radar signals received by the radar sensor, wherein the second radar signals are emitted by the active radar tag in a direction towards the radar sensor after reception of first radar signals reflected at the object.

2. Radar system according to claim 1, wherein the active radar tag (7) is configured to reemit received radar signals (29) amplified and frequency-modulated as second radar signals (31).

3. Radar system according to claim 2, wherein the frequency change is between 0.5 kHz and 2 MHz.

4. Radar system according to any one of the preceding claims, wherein the active radar tag (7) is configured to reemit received radar signals (29) amplified by up to at least 10 dB as second radar signals (31).

5. Radar system according to any one of the preceding claims, wherein the radar sensor (5) is a MIMO radar sensor with a plurality of transmitting antennas and a plurality of receiving antennas.

6. Radar system according to claim 5, wherein the MIMO radar sensor has less than four transmitting antennas and less than five receiving antennas.

7. Radar system according to any one of the preceding claims, wherein both the first radar signal (25) and the second radar signal (31) are in a frequency range of between 40 GHz and 120 GHz.

8. Radar system according to any one of the preceding claims, wherein the active radar tag (7) is configured to emit the second radar signals (31) in a direction opposite to the received radar signals (29).

9. Radar system according to any one of claims 1 to 7, wherein the active radar tag (7) is configured to emit the second radar signals (31) in a direction towards the radar sensor (5).

10. Vehicle (1) with a radar system (3) according to any one of the preceding claims.

## Revendications

1. Système radar (3), en particulier destiné à être utilisé dans un véhicule (1), le système radar (3) comprenant :
un capteur radar (5) pour émettre et recevoir des premiers signaux radar (25) ;
un dispositif d'évaluation (9) pour traiter des signaux radar (27, 33) reçus par le capteur radar (5) après une réflexion sur un objet ;
dans lequel
le système radar (3) comprend en outre au moins une étiquette radar active (7) qui est configurée pour réémettre des signaux radar reçus (29) de manière amplifiée et modulée en tant que deuxièmes signaux radar (31), dans lequel le capteur radar (5) et l'étiquette radar active (7) sont espacés latéralement l'un de l'autre d'une distance comprise entre 1 cm et 10 m, de préférence d'une distance comprise entre 10 cm et 2 m, dans lequel l'étiquette radar active (7) est configurée pour réémettre des signaux radar reçus (29) de manière amplifiée et décalée en fréquence d'une variation de fréquence en tant que deuxièmes signaux radar (31), et
le dispositif d'évaluation (9) est configuré pour déterminer des informations sur l'objet à la fois sur la base de parties des premiers signaux radar réfléchis sur l'objet reçues par le capteur radar et sur la base de parties des deuxièmes signaux radar réfléchis sur l'objet reçues par le capteur radar, ou pour déterminer des informations sur l'objet à la fois sur la base de parties des premiers signaux radar réfléchis sur l'objet reçues par le capteur radar et sur la base de deuxièmes signaux radar reçus par le capteur radar, dans lequel les deuxièmes signaux radar sont émis par l'étiquette radar active après réception de premiers signaux radar réfléchis sur l'objet dans une direction allant vers le capteur radar.

2. Système radar selon la revendication 1, dans lequel l'étiquette radar active (7) est configurée pour réémettre des signaux radar reçus (29) de manière amplifiée et modulée en fréquence en tant que deuxièmes signaux radar (31).

3. Système radar selon la revendication 2, dans lequel la variation de fréquence est comprise entre 0,5 kHz et 2 MHz.

4. Système radar selon l'une des revendications précédentes, dans lequel l'étiquette radar active (7) est configurée pour réémettre des signaux radar reçus (29) de manière amplifiée jusqu'à au moins 10 dB en tant que deuxièmes signaux radar (31).

5. Système radar selon l'une des revendications précédentes, dans lequel le capteur radar (5) est un capteur radar MIMO avec plusieurs antennes d'émission et plusieurs antennes de réception.

6. Système radar selon la revendication 5, dans lequel le capteur radar MIMO comprend moins de quatre antennes d'émission et moins de cinq antennes de réception.

7. Système radar selon l'une des revendications précédentes, dans lequel à la fois le premier signal radar (25) et le deuxième signal radar (31) se situent dans une plage de fréquences comprise entre 40 GHz et 120 GHz.

8. Système radar selon l'une des revendications précédentes, dans lequel l'étiquette radar active (7) est configurée pour émettre les deuxièmes signaux radar (31) dans une direction opposée aux signaux radar reçus (29).

9. Système radar selon l'une des revendications 1 à 7, dans lequel l'étiquette radar active (7) est configurée pour émettre les deuxièmes signaux radar (31) dans une direction allant vers le capteur radar (5).

10. Véhicule (1) comprenant un système radar (3) selon l'une des revendications précédentes.
